# EUROPÄISCHE PATENTSCHRIFT

(11) **EP 3 212 117 B1**
(45) Veröffentlichungstag und Bekanntmachung des Hinweises auf die Patenterteilung: **11.12.2019**
(21) Anmeldenummer: 15784053.9
(22) Anmeldetag: 22.10.2015
(51) Int. Cl.: A61C 7/14, A61C 7/02, A61C 7/30

(54) **KIEFERORTHOPÄDISCHE APPARATUR**
ORTHODONTIC DEVICE
APPAREILLAGE ORTHODONTIQUE

(30) Priorität: 29.10.2014 CH 16642014
(43) Veröffentlichungstag der Anmeldung: 06.09.2017
(73) Patentinhaber: Von Mandach, Christoph, 5225 Bözberg (CH)
(72) Erfinder: Von Mandach, Christoph, 5225 Bözberg (CH)
(74) Vertreter: Schneider Feldmann AG Patent- und Markenanwälte
(86) Internationale Anmeldenummer: PCT/EP2015/074448
(87) Internationale Veröffentlichungsnummer: WO 2016/066514

(56) Entgegenhaltungen:
- WO-A1-2015/140026
- US-A- 3 052 028
- US-A- 4 626 208
- US-A- 5 542 842
- US-A1- 2005 227 196

## Beschreibung

### Technisches Gebiet

Die vorliegende Erfindung betrifft eine kieferorthopädische Apparatur mit Haken und einem Röhrchen zur Führung und Halterung eines Behandlungsbogens, umfassend eine Basisplatte mit mindestens einem annähernd planen Bereich mit einer zum Zahn gerichteten Klebseite und angeformten Haken zur Befestigung von Gummizügen, Ligaturen und/oder Zugketten, wobei die Apparatur aus einer Metallblechplatte stanzbiegetechnisch schweiss- und lötfrei gefertigt ist.

Die heute aktuellen Behandlungsmittel zur Korrektur von Zahnfehlstellungen können in abnehmbare und festsitzende Apparaturen eingeteilt werden. Unter festsitzender Apparatur versteht man gemeinhin Brackets und Röhrchen. Sie machen den grössten Anteil der kieferorthopädischen Apparaturen aus. Kieferorthopädische Apparaturen wie Brackets und Röhrchen werden auf der Zahnoberfläche zuerst genau ausgerichtet und dann festgeklebt. Die seit 1925 bereits bekannten Edgewise-Brackets haben neben einem Slot in dem der kieferorthopädische Draht geführt wird nach oben und nach unten gerichtete Bracketflügel (Wings), über die Gummi-O-Ringe oder Gummiketten oder auch Elastikmodule gezogen werden. Diese dienen dazu den kieferorthopädischen Draht, bzw. den Behandlungsbogen im Slot zu halten. Eine ähnliche Funktion haben auch kieferorthopädische Apparaturen in Form eines Röhrchens. Diese Röhrchen, können sowohl buccal als auch lingual eingesetzt werden, werden aber meist als BuccalRöhrchen verwendet. Festsitzende kieferorthopädische Apparaturen wie Brackets und Röhrchen besitzen zudem auch Haken, die als Befestigungsteile für Gummizüge, Ligaturen und/oder Zugketten dienen.

### Stand der Technik

Kieferorthopädische Apparaturen in Form von Röhrchen gehören zu den ältesten kieferorthopädische Apparaturen. Bereits Edward H. Angle hat solche Röhrchen verwendet, wobei diese der Endverankerung des Behandlungsbogens dienten und an sogenannten Molarbänder aufgelötet waren. Wie aus dem entsprechenden Patent US 678453 ersichtlich wiesen solche Röhrchen noch keine Haken auf, da damals noch keine Gummibänder verwendet wurden. Jeder einzelne Zahn wurde mittels Ligaturen zum Behandlungsbogen hin gezogen. Als ein gesondertes Element verwendete Edward Angle auch Haken die wiederum an einem molaren Band befestigt waren. Dies zeigt die US 1204114. Ein weiteres Röhrchen zeigt das US Patent 3639986. Hier wurde das Röhrchen als Stangenmaterial gefertigt und ein Abschnitt davon an einer Lasche angeschweisst oder gelötet, welche wiederum an einem Molarband angebracht war. Die Lasche selbst weist hier einen Haken auf.

In ähnlicher Weise wurde gemäss der US 3075287 ein Molarband mit einem von gingival nach okklusal querendem Steg gestaltet, unter dem ein Röhrchen hindurch geschoben war. Auch diese Lösung zeigt aber noch keine Haken.

Später ist man von den aus Blech gefertigten Röhrchen und Haken abgekommen, da deren Fertigungstechnik die Gestaltung sehr limitiert hat. Mit dem Aufkommen der Mikrotechnik wurden solche Elemente, ebenso wie die Brackets aus Metall, spanabhebend gefertigt oder später mit der aufkommenden MIM-Technik (Micromold Injection). Dies liess nun praktisch jede Gestaltungsform zu wie rein beispielsweise die folgenden Dokumente belegen: US 5320526; US 4781582; WO 2005107629 oder auch das Dokument US 8444414. Etwas speziell ist die Lösung gemäss der US 8235714. Hier wird ein Bracket vorgeschlagen, mit einem klemmend darauf anbringbaren Deckel, so dass das Bracket mit dem Deckel als Röhrchen oder ohne Deckel als herkömmliches Bracket verwendbar ist.

Ein Röhrchen der eingangs genannten Art ist aus der US 4028809 bekannt. Hier ist ein einstückig aus Blech gefertigtes Röhrchen mit Haken ersichtlich. Dieses ist aus einer Blechplatte u-förmig gebogen und an den vertikalen Wänden dieses u-förmigen Teiles sind Flanschen angeformt, die zur Befestigung auf einem molaren Band geeignet sind. Hier besteht das Röhrchen jedoch lediglich aus dem u-förmigen Tunnel und der Behandlungsbogen (Archwire) verläuft in diesem Tunnel. Je nach Wünschen oder Anforderungen des Behandlers parallel oder geneigt zur Verlaufsrichtung der seitlichen Flanschen. Dies bedingt, dass sowohl die Höhe als auch die Breite dieses Tunnels wesentlich grösser sind als der Durchmesser des Behandlungsbogens. Je grösser jedoch eine Kieferorthopädische Apparatur ist, umso stärker sind die auftretenden Irritationen des Patienten. Auch die vollständige rechteckige Konstruktion führt zu scharfen Kanten die zu Verletzungen an den Schleimhäuten in der Mundhöhle führen. Erwünscht ist heute, dass der Behandlungsbogen meist möglichst nahe der Zahnoberfläche entlang geführt wird. Dies könnte das bekannte Röhrchen erfüllen, da aber das Röhrchen kein Röhrchen ist, sondern lediglich ein u-förmiger Tunnel, liegt hier der Behandlungsbogen direkt auf dem Zahn an. Dies kann aber zu Schäden an der Zahnoberfläche führen.

Das Dokument US2005/0227196 offenbart auch eine kieferorthopädische Apparatur mit einem Röhrchen zur Führung und Halterung eines Behandlungsbogens.

Dank den heute möglichen mikrotechnischen Biege-Stanzverfahren lassen sich wesentlich komplexere Gestaltungsformen realisieren, die die vorgenannten Nachteile beheben.

Es ist folglich die Aufgabe der vorliegenden Erfindung ein Röhrchen mit Haken zu schaffen, der eingangs genannten Art zu schaffen, bei welchen am Patienten keine Irritationen auftreten, keine Schädigungen der Zahnoberfläche durch den Behandlungsbogen auftreten können und der Behandlungsbogen exakt in einem Röhrchen führbar ist.

Diese Aufgabe erfüllt eine kieferorthopädische Apparatur mit den Merkmalen des Patentanspruches 1.

Es ist eine weitere Aufgabe der vorliegenden Erfindung ein Mittel zur Verfügung zu stellen, welches den Auftrag von Klebstoff auf die kieferorthopädische Apparatur erleichtert und die klebstofffrei zu bleibenden Teile schützt und gleichzeitig als Applikator zur Positionierung und Aufbringung der kieferorthopädischen Apparatur auf den gewünschten Zahn erleichtert.

### Kurze Beschreibung der Zeichnungen

In der anliegenden Zeichnung sind verschiedene Ausführungsformen des Erfindungsgegenstandes dargestellt und anhand der nachfolgenden Beschreibung erläutert.

Es zeigt:
Figuren 1 - 3 eine erste Ausführungsform der erfindungsgemässen kieferorthopädische Apparatur in drei Ansichten, nämlich in der Ansicht von oben, in Seitenansicht und in perspektivischer Darstellung.
Figuren 4 - 6 zeigen eine zweite Ausführungsform die formlich der ersten Ausführungsform entspricht, jedoch relativ grosse Lichtdurchtrittsöffnungen aufweist, wiederum in den gleichen drei Darstellungsformen wie das erste Ausführungsbeispiel.
Figuren 7 - 9 stellen eine dritte Ausführungsform dar, bei der die gingivale Kante geringfügig anders gebogen ist und statt wenigen grossen, eine Vielzahl von kleinen Lichtdurchtrittsöffnungen vorgesehen sind.

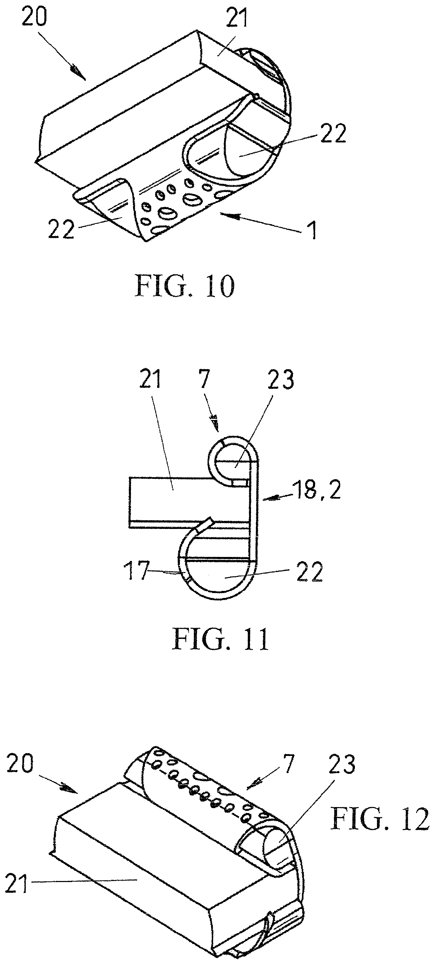

Figuren 10 - 12 zeigen die kieferorthopädische Apparatur in der Ausführung gemäss Figur 7 - 9 mit einem darin eingebrachten Applikator der gleichzeitig Protektor ist. Einmal perspektivisch mit Blick schräg von unten auf die gingivale Seite, einmal in einer Seitenansicht und einmal wiederum perspektivisch von schräg oben mit Blick auf die okklusale Seite der kieferorthopädische Apparatur.
Figuren 14 - 15 zeigen wiederum die kieferorthopädische Apparatur nach Entfernung des Applikators mit aufgebrachter Klebschicht und schliesslich zeigen
Figuren 16 - 18 die kieferorthopädische Apparatur in der zweiten Ausführungsform gemäss Figur 4 - 6 mit einer eingeschobenen Halteplatte mit Öse wobei alle drei Figuren perspektivische Ansichten aus verschiedenen Blickwinkel zeigen.

### Darstellung der Erfindung

Die Erfindung ist wie in Ansprüche 1 und 10 definiert.

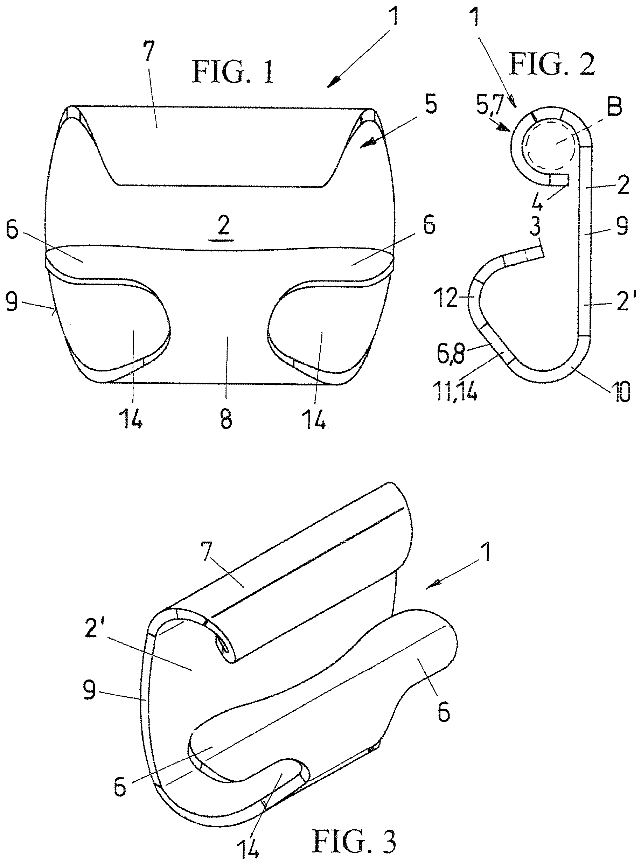

In den Figuren 1 - 9 sind drei Ausführungsbeispiele des Erfindungsgegenstandes dargestellt. Jede Ausführungsform ist jeweils in der Aufsicht, in einer Seitenansicht und in einer perspektivischen Darstellung gezeigt. Die kieferorthopädische Apparatur ist insgesamt jeweils mit 1 bezeichnet. Der Begriff kieferorthopädische Apparatur wurde hier gewählt, um die vielseitige Verwendbarkeit zum Ausdruck zu bringen. Auf dem Markt sind sowohl kieferorthopädische Apparaturen bekannt die nur aus Haken oder nur aus Röhrchen bestehen. Die hier gezeigte Lösung einer kieferorthopädische Apparatur dient beiden zuvor genannten Ausführungsformen und kann auch hilfsweise Bracket Funktionen übernehmen. Auch der Begriff Röhrchen ist verallgemeinert obwohl im Handel wird eine solche Apparatur meist Buccalröhrchen genannt wird. Dank der Kleinheit der erfindungsgemässen Apparatur lässt sich ein solches Röhrchen nicht nur buccal sondern auch lingual einsetzen. Der Begriff Lingualröhrchen ist jedoch nicht gebräuchlich.

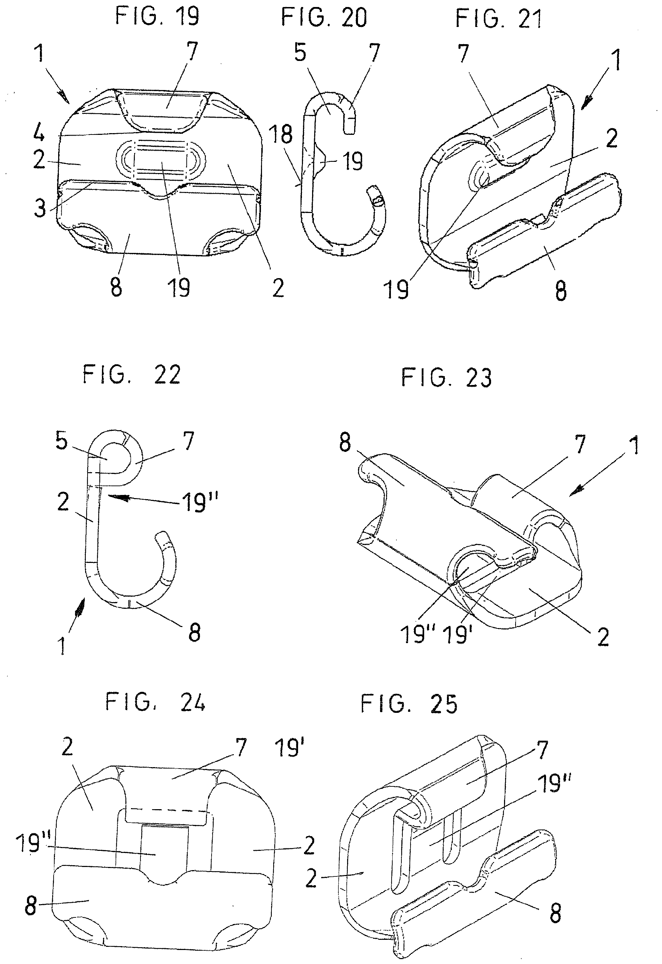

Figuren 19 - 21 zeigen eine kieferorthopädische Apparatur gemäss den Figuren 1 - 3 in alternativer Ausführung in der Aufsicht, Seitenansicht und in perspektivischer Darstellung.

Figuren 22 - 25 stellen eine weitere Variante der kieferorthopädischen Apparatur dar, wiederum in Seitenansicht, Aufsicht und in zwei verschiedenen perspektivischen Darstellungen.

Die erfindungsgemässe kieferorthopädische Apparatur 1 wird mittels Biege-Stanzverfahren schweiss- und lötfrei aus flachem Blech geformt. Die Dicke eines solchen Bleches wird zwischen 0.1 mm und 0.5 mm gewählt. Bevorzugterweise wird man die dünneren Bleche im Bereich von 0.1 mm - 0.3 mm wählen. Für die hier interessierenden kieferorthopädische Apparaturen eignen sich kaltgewalzte, weiche Kobalt-Chrom-Nickel-Bleche welche sich sehr gut verarbeiten und anschliessend zu hoher Härte vergüten lassen. Solche Bleche aus Kobalt-Chrom-Nickel-Legierungen sind auf dem Markt unter der Bezeichnung Phynox bekannt die beispielsweise von der Firma Matthey SA vertrieben werden. Ausgehend von einem Flachblech lassen sich die hier interessierenden kieferorthopädischen Apparaturen mit hoher Taktgeschwindigkeit mittels Stanz-Biege-Werkzeuge fertigen.

Sämtlich umlaufenden Kanten sowie eventuelle Durchbrüche lassen sich in einem Stanzvorgang in die plane Ausgangsform gestalten und werden anschliessend von der zweidimensionalen Gestaltung in die dreidimensionale Gestaltung durch biegen geformt.

Vorliegend wird die plane Abwicklung des Stanzteiles vor der Biegung insgesamt als Basisplatte bezeichnet. Der nicht biegetechnisch verformte Bereich der Basisplatte 1 wird als planer Bereich 2' bezeichnet. Dieser Bereich ist insbesondere in der Figur 2 deutlich erkennbar. In den Figuren 1 und 3 wirkt dieser plane Bereich 2' gewölbt doch dieser Eindruck täuscht, da die Seitenkanten 9 konvex innerhalb der Ebene gekrümmt verlaufen. Die Basisplatte 2 wird, wie bereits erwähnt, seitlich durch die Seitenkanten 9 begrenzt während die obere Kante als okklusale Kante 4, und die untere Kante als gingivale Kante 3, bezeichnet sind. Die okklusale Kante wird um mindestens 200°, bevorzugt jedoch um 270° zum Zentrum der Basisplatte 2 hin umgebogen. So entsteht eine okklusale Einrollung 7, welches dann das eigentliche Röhrchen 5 bildet. Dieses Röhrchen ist so dimensioniert, dass darin ein Behandlungsbogen B Aufnahme findet. In der hier dargestellten Ausführungsform ist, wie in der Figur 2 erkennbar, diese okklusale Kante 4 um rund 270° zum Zentrum hin umgebogen.

Ausgehend vom planen Bereich 2' der Basisplatte 2 ist die gingivale Kante 3 ebenfalls zum Zentrum hin und von der Klebeseite 17 weggebogen. Unter der Klebeseite wird selbstverständlich jene Fläche der Basisplatte 2 bezeichnet die in der Verwendung zur Zahnoberfläche hin gerichtet ist. Diese Umbiegung bildet die gingivale Einrollung 8. Diese gingivale Einrollung 8 weist eine erste Biegung 10 die am planen Bereich 2' anschliesst auf. Dieser ersten Biegung 10 folgt ein gerade verlaufender Abschnitt 11. Die erste Biegung 10 verläuft um weniger als 180° bevorzugterweise um 120° - 150° so dass dann ein schräg nach oben verlaufender gerader Abschnitt 11 gebildet ist. Diesem gerade verlaufenden Abschnitt 11 folgt dann die zweite Biegung 12 die um mehr als 90° verläuft. Bevorzugt verläuft diese Biegung um 100° - 120°. Der zweiten Biegung 12 folgt ein gerade verlaufender Endabschnitt 13. In den beiden Seitenkanten 9 sind konkave Einschnitte 14 vorhanden. Diese konkaven Einschnitte 14 kommen im fertig gebogenen Zustand der kieferorthopädischen Apparatur 1 im Bereich des geraden Abschnittes 11 der gingivalen Einrollung 8 zu liegen. Durch diese konkave Einschnitte 14 bilden sich dann die Haken 6. Der Begriff Haken bedeutet lediglich, dass diese dazu dienen Gummizüge, Ligaturen und/oder Zugketten aber auch O-Ringe anzuhängen. Diese Haken 6 haben hier eine flügelartige Gestaltung. Diese Haken oder Flügel durchgreifen dann beispielsweise die Ösen solcher Gummizugketten oder O-Ringe die als Gummizüge bezeichnet werden. Auch Drahtverbindungen lassen sich hier anbinden, das heisst sogenannte Ligaturen.

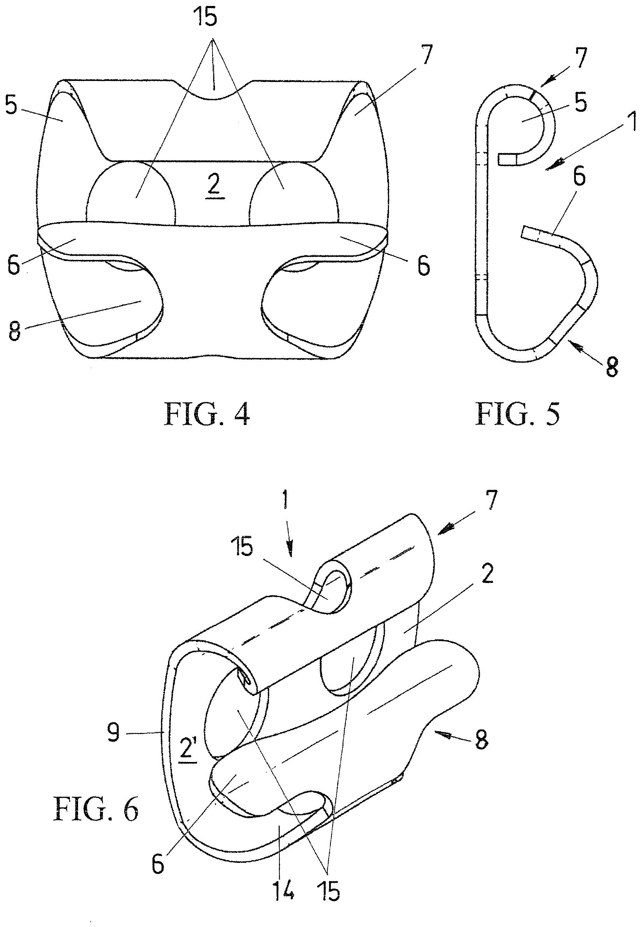

Eine zweite Ausführungsform der erfindungsgemässen kieferorthopädischen Apparatur zeigen die Figuren 4 - 6. Die äussere Kontur entspricht vollständig jener der ersten Ausführungsform. Abweichend von der ersten Ausführungsform erkennt man mehrere relativ grosse ausgestanzte Lichdurchlassöffnungen 15. Zwei dieser Durchlassöffnungen 15 sind neben einander angeordnet und liegen vollständig im planen Bereich 2'. Zwei weitere ausgestanzte Lichtdurchlassöffnungen 15 liegen teilweise in der okklusalen Einrollung 7 und der gingivalen Einrollung 8. Der Sinn dieser Lichtdurchlassöffnungen 15 besteht darin, dass solche kieferorthopädischen Apparaturen mittels lichthärtenden Klebstoffen auf dem Zahn befestigt werden. Würde man diese Lichtdurchlassöffnungen 15 nicht vorsehen, müsste man das Licht seitlich vom Bracket zwischen Zahnfläche und der Basisplatte 2 einleiten, so wie dies heute meist geschieht. Eine verbesserte Lichtdurchführung führt somit zu einer schnelleren und homogeneren Aushärtung des Klebers. Hierdurch wird die bis anhin immer noch relativ hohe Rate von kieferorthopädischen Apparaturen die abfallen mit Sicherheit gesenkt werden.

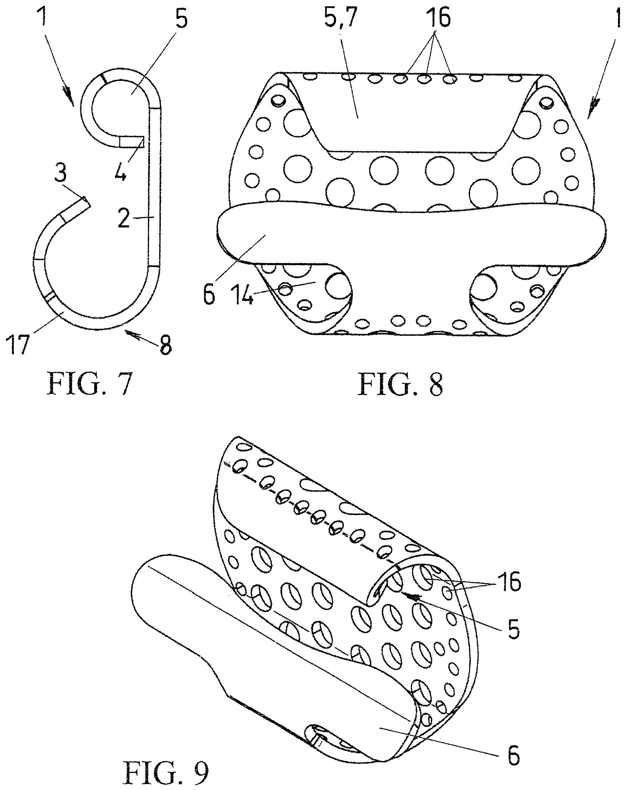

In den Figuren 7 - 9 ist eine dritte Ausführungsform der kieferorthopädischen Apparatur 1 gezeigt. Die generelle Gestaltungsform ist im Wesentlichen übereinstimmend mit den beiden zuvor beschriebenen Ausführungsformen. Auffallend ist jedoch, dass hier die gingivale Einrollung 8 zur Bildung der flügelartigen Haken 6 aus einer einzigen Biegung 17 geformt ist. Hierdurch wird die Distanz zwischen der gingivalen Kante 3 und dem planen Bereich 2' der Basisplatte 2 etwas vergrössert, was die Gestaltung und die Einführung eines Applikators vereinfacht.

Anstelle der relativ grossen Lichtdurchlassöffnungen 15 gemäss der zweiten Ausführungsform nach den Figuren 4 - 6 sind hier eine Vielzahl von kleinen Lichtdurchlassöffnungen 16 eingeformt. Der Durchmesser dieser Lichtdurchlassöffnungen 16 beträgt zwischen 0.1 und 0.4 mm. Bei kieferorthopädischen Apparaturen die nach der MIM-Technik oder spanabhebend gefertigt sind lassen sich solche Lichtdurchlassöffnungen kaum herstellen und falls doch dann praktisch nur bei Brackets und auch hier beschränkt auf den Bereich des Slots. Die bevorzugte Ausführungsform gemäss den Figuren 7 - 9 lässt eine schnelle und vollkommende Härtung eines lichthärtenden Klebers besonders vorteilhaft realisieren. Prinzipiell genügt es bei diesen Versionen lediglich den planen Bereich 2' der Basisplatte 2 mit Lichtdurchlassöffnungen 16 zu versehen.

Die Erfindung schafft zudem ein Mittel, welches beim Applizieren eines Klebstoffes auf die zum Zahn hin zu liegen kommende Seite 18 der Basisplatte 2 die kieferorthopädische Apparatur 1 schützt, damit Klebstoff nur dorthin kommen kann wo er sein soll und welches zudem der Applizierung der Apparatur 1 auf den Zahn dient. Dieses Mittel wird nachfolgend Applikator beziehungsweise Protektor genannt und ist mit den Figuren mit 20 bezeichnet. Der Applikator 20 weist eine Halteplatte 21 auf, die im montierten Zustand mit einem Ende auf den planen Bereich 2' der Basisplatte 2 aufliegt und sich senkrecht an dieser Basisplatte 2 nach oben erstreckt. Auf der gingivalen Seite ist an der Halteplatte 21 eine angeformte Wulst 22 ersichtlich. Diese angeformte Wulst 22 füllt den gesamten inneren Bereich der gingivalen Einrollung 8 aus. Damit deckt der Applikator 20 sämtliche eventuel vorhandenen Lichtdurchlassöffnungen 15 bzw. 16 ab, mit Ausnahme jener Lichtdurchlassöffnungen, die innerhalb des Bereiches der okklusalen Einrollung 7 liegen. Hierzu kann ein gesondertes Teil vorhanden sein, der als Dichtstab 23 dargestellt ist. Sind innerhalb des Bereiches der okklusalen Einrollung 7 keine Lichtdurchlassöffnungen 15 oder 16 vorhanden, so kann selbstverständlich auf diesen Dichtstab 23 verzichtet werden. Wie der Name bereits sagt, dient der Applikator 20 insbesondere dem Applizieren der kieferorthopädischen Apparatur 1 auf einen Zahn. Die Halteplatte 21 mit der angeformten Wulst 22 lässt sich von der Seite her in die kieferorthopädische Apparatur einschieben. Im eingeschobenen Zustand ist nun der Applikator 20 form- und kraftschlüssig gehalten. Der Kraftschluss ergibt sich dadurch, dass die okklusale Einrollung 7 seitlich auf die Halteplatte 21 drückt, während die Haltewulst 22 den Formschluss in der gingivalen Einrollung bildet.

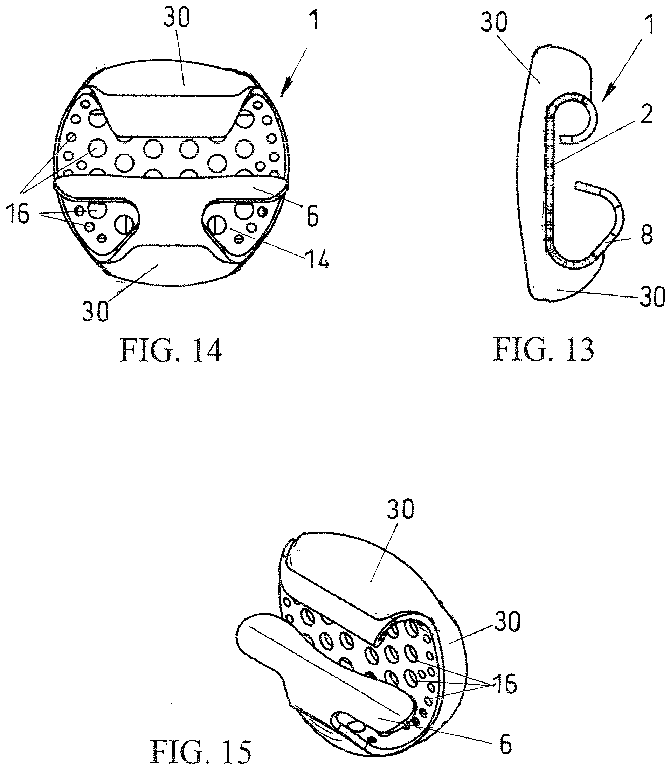

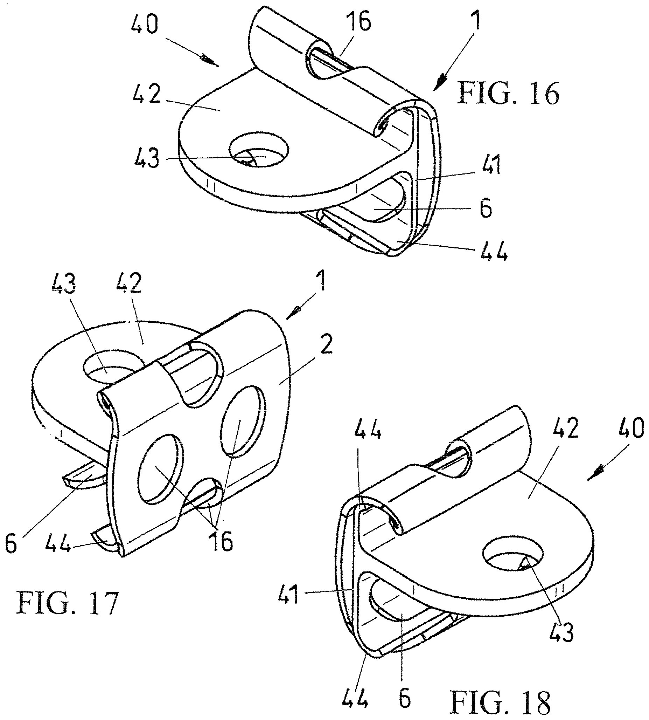

In den Figuren 13 - 15 ist nun die kieferorthopädische Apparatur gemäss den Figuren 7 - 9 mit Klebstoff 30 versehen dargestellt. Alle anderen Ausführungsformen lassen sich, obwohl nicht dargestellt, , genauso mit Klebstoff versehen. Der Applikator bzw. Protektor 20 ist hier entfernt. Die gingivale Einrollung 8 entspricht hier der Ausführungsform wie bei der Version gemäss den Figuren 1 - 3. Die Figuren 16 - 18 zeigen schliesslich die kieferorthopädischen Apparatur 1 gemäss der Ausführung in den Figuren 4 - 6. Hier ist zusätzlich die Möglichkeit aufgezeigt, dass eine solche Apparatur 1 zusätzlich mit einem Einschubteil 40 versehen sein kann. Dieses Einschubteil 40 dient vor allem dazu, Zugketten zu befestigen, die zur Anschlingung von retinierten Zähnen dient. Ausgehend von einer kieferorthopädischen Apparatur gemäss den Figuren 4 - 6 wie hier dargestellt oder jener gemäss den Figuren 7 - 9 lassen sich solche Apparaturen auch auf Zähnen anbringen, die wegen einer starken Engstellung kaum zum Durchbruch gekommen sind. Im Normalfall muss heute eine grosse Schmelzoberfläche freigelegt werden, um die Apparatur anbringen zu können und damit genügend Licht unter die Apparatur gelangt. Dies birgt die Gefahr der akzidentiellen Verletzung des Desmodontes. Eine Verletzung des Desmodontes führt zur Ankylose und zum Verlust des Zahnes. Häufig jedoch führt es lediglich dazu, dass die Kieferorthopädische Apparatur abfällt und ein neuer operativer Eingriff nötig wird. Die erfindungsgemässe Apparatur ist gegenüber jenen die heute auf dem Markt erhältlich sind wesentlich kleiner. Es besitzt eine Grundfläche von lediglich maximal 2 mm x 2.5 mm und eine vom Zahn abstehende Bauhöhe von 1.0 mm oder weniger. Dies ist damit das kleinste Röhrchen mit Haken im Vergleich zu den heute auf dem Markt befindlichen Lösungen.

Der Einschubteil 40 besitzt ein Klemmplatte 41 die beidseitig in den Einrollungen 7 und 8 eingreifen. Senkrecht mittig auf der Klemmplatte 41 ist die Ösenplatte 42 angeformt. Diese Ösenplatte 42 weist eine Öse auf an der Zugmittel, insbesondere Zugketten anhängbar sind. Die Klemmplatte 41 weist an deren Enden die in die Einrollungen 7 und 8 eingreifen Anlagewölbungen 44 auf, die den Radien dieser Einrollungen angepasst sind.

Die Figuren 19 - 21 zeigen eine kieferorthopädische Apparatur 1 mit in der Basisplatte mittels eines Stanzwerkzeuges eingeprägte längliche Wulst 19. Diese verläuft parallel zur gingivalen und zur okklusalen Kante 3, 4. Hierdurch entsteht auf der Klebeseite 18 der Basisplatte 2 ein zusätzlicher Raum zur Aufnahme von Klebstoff.

Eine federelastische Rückformung der okklusalen Einrollung 7 lässt sich gemäss der Lösung in den Figuren 22 - 25 vermeiden. Hier ist in der Basisplatte 2 der kieferorthopädischen Apparatur 1 eine U-förmige Ausstanzung 19' vorgesehen. Innerhalb dieser U-förmigen Ausstanzung 19' verbleibt dann eine Federzunge 19". Während des Stanz-Biegevorganges wird die Zunge 19" leicht aus der Basisplatte 2 nach oben gebogen, so dass diese an das freie Ende der okklusalen Einrollung 7, welche das Röhrchen 5 bildet, anliegt.

Neben den bereits beschriebenen erheblichen Vorteilen bezüglich der Verwendung der erfindungsgemässen kieferorthopädischen Apparatur ist es für den Anwender auch nicht unbedeutend, dass die erfindungsgemässe Lösung wesentlich preisgünstiger hergestellt werden kann als die bisher auf dem Markt erhältlichen Lösungen, deren Herstellungsverfahren erheblich kostenintensiver sind als das Stanzbiegeverfahren der Lösung gemäss der Erfindung.

### Bezugszeichenliste:

- 1: Kieferorthopädische Apparatur
- 2: Basisplatte
- B: Behandlungsbogen
- 2': planer Bereich von 2
- 3: gingivale Kante
- 4: okklusale Kante
- 5: Röhrchen
- 6: Haken, flügelartige
- 7: okklusale Einrollung
- 8: gingivale Einrollung
- 9: Seitenkanten
- 10: erste Biegung der gingivalen Einrollung
- 11: gerader Abschnitt der gingivalen Einrollung
- 12: zweite Biegung der gingivalen Einrollung
- 13: gerader Endabschnitt der okklusalen Einrollung
- 14: konkave Einschnitte
- 15: Lichtdurchlassöffnungen, gross
- 16: Lichtdurchlassöffnungen, klein
- 17: einzige Biegung
- 18: Klebeseite
- 19: längliche Wulst
- 19': U-förmige Ausstanzung
- 19": Federzunge
- 20: Applikator, Protektor
- 21: Halteplatte
- 22: angeformte Wulst
- 23: Dichtstab in 7
- 30: Klebstoff
- 40: Einschubteil
- 41: Klemmplatte
- 42: Ösenplatte
- 43: Öse
- 44: Anlagewölbungen fluchtend mit 15

## Patentansprüche

1. Kieferorthopädische Apparatur (1) mit Haken (6) und einem Röhrchen(5) zur Führung und Halterung eines Behandlungsbogens (B), umfassend eine Basisplatte (2) mit mindestens einem annähernd planen Bereich (2') mit einer zum Zahn gerichteten Klebseite (18) und angeformtem Haken (6) zur Befestigung von Gummizügen, Ligaturen und/oder Zugketten, wobei die orthopädische Apparatur (1) aus einer Metallblechplatte stanzbiegetechnisch schweiss- und lötfrei gefertigt ist, **dadurch gekennzeichnet ist, dass** die Basisplatte (2) einen planen Bereich (2') mit einer gingivalen (3) und einer okklusalen Kante (4) aufweist, wobei die okklusale Kante (4) eine okklusale Einrollung (7) zur Bildung eines Röhrchens (5) umfasst, die mindestens 200° zum planen Bereich (2') der Basisplatte (2) hin von der Klebeseite (18) der Basisplatte (2) weg eingerollt ist und die gingivale Kante (3) gegenläufig um 150° bis 270° eingerollt ist, und dass in beide Seitenkanten (9) konkave Einschnitte (14) eingeformt sind, welche zwei entgegengesetzt gerichtete Haken (6), welche Teil der gingivalen Einrollung (8) sind, bilden, und die zur Befestigung von Gummizügen, Ligaturen und / oder Zugketten dienen.

2. Kieferorthopädische Apparatur nach Anspruch 1, **dadurch gekennzeichnet, dass** mindestens im planen Bereich (2') der Basisplatte (2) Lichtdurchlassöffnungen (15, 16) eingeformt sind.

3. Kieferorthopädische Apparatur nach Anspruch 2, **dadurch gekennzeichnet, dass** die Lichtdurchlassöffnungen (15) zwei nebeneinander angeordnete Öffnungen sind, deren Durchmesser zwischen 30 % und 60 % der in okklusal gingivaler Richtung sich erstreckenden planen Bereich (2') der Basisplatte (2) entsprechen.

4. Kieferorthopädische Apparatur nach Anspruch 1, **dadurch gekennzeichnet, dass** in die Basis (2) auf einer Mittellinie zwischen den beiden Seitenkanten (9) Lichtdurchlassöffnungen (15) angeordnet sind, die je ganz oder teilweise im planen Bereich (2') der Basisplatte (2) liegen.

5. Kieferorthopädische Apparatur nach Anspruch 1, **dadurch gekennzeichnet, dass** die Einrollung (8) der gingivalen Kante (3) in zwei Biegungen (10,12) in gleicher Drehrichtung erfolgt und zwischen den beiden Biegungen ein gerade verlaufender Abschnitt (11) vorhanden ist.

6. Kieferorthopädische Apparatur nach Anspruch 5, **dadurch gekennzeichnet, dass** die konkaven Einschnitte (14) in den Seitenkanten (9) im Wesentlichen im gerade verlaufenden Abschnitt (11) eingeformt sind.

7. Kieferorthopädische Apparatur nach Anspruch 1, der **dadurch gekennzeichnet ist, dass** dieses ein Einschubteil (40) umfasst, welches eine Klemmplatte (41) und eine Oesenplatte (42) mit einer eingeformten Oese (43) umfasst.

8. Kieferorthopädische Apparatur nach Anspruch 1, **dadurch gekennzeichnet, dass** in der Basisplatte (2) eine längliche Wulst (19) parallel zur okklusalen Kante (4) von der Klebeseite (18) her stanztechnisch eingepresst ist.

9. Kieferorthopädische Apparatur nach Anspruch 1, **dadurch gekennzeichnet, dass** in der Basisplatte (2) eine U-förmige Ausstanzung (19') eingeformt ist, die eine Federzunge (19") definiert, welche mit seinem freien Ende zur okklusalen Einrollung 7 hinweist und an dieser zur Anlage gelangt.

10. Mittel zum Setzen einer kieferorthopädische Apparatur nach einer der Ansprüche 1-9, **dadurch gekennzeichnet, dass** das Mittel ein Applikator/Protektor (20) ist, mit einer Halteplatte (21), die einen planen Abschnitt aufweist, der gingival und okklusal in die Einrollungen (7,8) einklemmbarist, wobei der Applikator /Protektor (20) kraftschlüssig in die kieferorthopädische Apparatur (1) einschiebbar ist und mit einer senkrecht an der Halteplatte (21) angeformten Wulst (22) versehen ist.

11. Mittel nach Anspruch 10 zur Verwendung in einer kieferorthopädischen Apparatur nach einer der Ansprüche 2-4, **dadurch gekennzeichnet, dass** der Applikator / Protektor (20) mindestens die in der planen Basisplatte (2) liegenden Lichtdurchlassöffnungen (15, 16) vollständig abdichtet.

12. Mittel nach Anspruch 10 oder 11, **dadurch gekennzeichnet, dass** es aus transparentem Kunststoff gefertigt ist.

## Claims

1. An orthodontic appliance (1) with hooks (6) and with a tube (5) for guiding and holding an archwire (B), comprising a base plate (2) with at least one approximately planar region (2') having a bonding side (18) orientated towards the tooth and having an integrally formed hook (6) for fastening elastic bands, ligatures and/or pull chains, wherein the orthodontic appliance (1) is manufactured from a sheet metal plate with stamping-bending technology in a weld-free and solder-free manner, is **characterized in that** the base plate (2) comprises a planar region (2') with a gingival (3) and with an occlusal edge (4), wherein the occlusal edge (4) comprises an occlusal crimp (7) in order to form a tube (5) which is crimped away from the bonding side (18) of the base plate (2) through at least 200° to the planar region (2') of the base plate (2) and the gingival edge (3) is crimped in the opposite direction by 150° to 270°, and **in that** concave indentations (14) are formed in both side edges (9), said indentations forming two hooks (6) which are orientated in opposite directions and which form part of the gingival crimp (8) and act to fasten rubber bands, ligatures and/or pull chains.

2. The orthodontic appliance as claimed in claim 1, **characterized in that** openings for the passage of light (15, 16) are formed in at least the planar region (2') of the base plate (2).

3. The orthodontic appliance as claimed in claim 2, **characterized in that** the openings for the passage of light (15) are two openings which are disposed adjacent to one another, with diameters which correspond to between 30 % and 60 % of the planar region (2') of the base plate (2) which extends in the occlusal-gingival direction.

4. The orthodontic appliance as claimed in claim 1, **characterized in that** openings for the passage of light (15) which are respectively positioned entirely or partially in the planar region (2') of the base plate (2) are disposed in the base plate (2) on a central line between the two side edges (9).

5. The orthodontic appliance as claimed in claim 1, **characterized in that** the crimp (8) of the gingival edge (3) is formed by two bends (10, 12) in the same rotational direction, and a section (11) running in a straight manner is present between the two bends.

6. The orthodontic appliance as claimed in claim 5, **characterized in that** the concave indentations (14) are formed in the side edges (9) essentially in the section (11) running in a straight manner.

7. The orthodontic appliance as claimed in claim 1, which is **characterized in that** it comprises an insertion portion (40) which comprises a clamping plate (41) and an eyelet plate (42) with an eyelet (43) formed therein.

8. The orthodontic appliance as claimed in claim 1, **characterized in that** an elongate bead (19) which is parallel to the occlusal edge (4) is pressed into the base plate (2) from the bonding side (18) using a pressing technique.

9. The orthodontic appliance as claimed in claim 1, **characterized in that** a U-shaped cut-out (19') which defines a flexible tongue (19'') is formed in the base plate (2), wherein its free end is orientated towards the occlusal crimp (7) and makes contact therewith.

10. A means for positioning an orthodontic appliance as claimed in one of claims 1 - 9, **characterized in that** the means is an applicator/protector (20), with a holding plate (21) which comprises a planar section which can be clamped gingivally and occlusally into the crimps (7, 8), wherein the applicator/protector (20) can be non-positively inserted into the orthodontic appliance (1) and is provided with a bead (22) which is formed perpendicularly on the holding plate (21).

11. A means according to claim 10, for use in an orthodontic appliance as claimed in one of the claims 2 - 4, **characterized in that** the applicator/protector (20) completely seals off at least the openings for the passage of light (15, 16) which are positioned in the planar base plate (2).

12. A means according to claim 10 or claim 11, **characterized in that** it is manufactured from transparent plastic.

## Revendications

1. Appareil orthodontique (1) comprenant des crochets (6) et un petit tube (5) pour guider et fixer un arc de traitement (B), comprenant une plaque de base (2) avec au moins une zone presque plane (2') avec une face collante (18) dirigée vers la dent et un crochet formé (6) pour fixer des caoutchoucs, des ligatures et/ou des fils de traction, dans lequel l'appareil orthodontique (1) est fabriqué dans une plaque de tôle métallique par estampage-pliage sans soudage ni brasage, **caractérisé en ce que** la plaque de base (2) présente une zone plane (2') avec une arête gingivale (3) et occlusale (4), dans lequel l'arête occlusale (4) comprend un enroulement (7) occlusal pour former un petit tube (5) qui est enroulé au moins à 200° en direction de la zone plane (2') de la plaque de base (2) en partant de la face collante (18) de la plaque de base (2), et l'arête gingivale (3) est enroulée dans le sens opposé de 150° à 270°, et que dans les deux arêtes latérales (9) sont formées des encoches concaves (14) qui forment deux crochets (6) dirigés opposés l'un à l'autre, qui font partie de l'enroulement gingival (8), et servent à fixer des caoutchoucs, des ligatures et/ou des fils de traction.

2. Appareil orthodontique selon la revendication 1, **caractérisé en ce que** des ouvertures de passage de la lumière (15, 16) sont formées au moins dans la zone plane (2') de la plaque de base (2).

3. Appareil orthodontique selon la revendication 2, **caractérisé en ce que** les ouvertures de passage de la lumière (15) sont deux ouvertures disposées l'une à côté de l'autre dont les diamètres font entre 30 % et 60 % de la zone plane (2') de la plaque de base (2) s'étendant dans la direction occlusale et gingivale.

4. Appareil orthodontique selon la revendication 1, **caractérisé en ce que** des ouvertures de passage de la lumière (15) sont disposées dans la base (2), sur une ligne médiane entre les deux arêtes latérales (9), lesquelles reposent tout ou partie dans la zone plane (2') de la plaque de base (2).

5. Appareil orthodontique selon la revendication 1, **caractérisé en ce que** l'enroulement (8) de l'arête gingivale (3) s'effectue en deux courbures (10, 12) dans le même sens de rotation et un tronçon (11) droit est présent entre les deux courbures.

6. Appareil orthodontique selon la revendication 5, **caractérisé en ce que** les encoches concaves (14) dans les arêtes latérales (9) sont formées essentiellement dans le tronçon (11) droit.

7. Appareil orthodontique selon la revendication 1, **caractérisé en ce que** celui-ci comprend une pièce d'insertion (40) qui comprend une plaque de serrage (41) et une plaque à œillets (42) avec un œillet (43) formé.

8. Appareil orthodontique selon la revendication 1, **caractérisé en ce que** dans la plaque de base (2), un bourrelet (19) longitudinal est comprimé parallèlement à l'arête (4) occlusale par une technique d'estampage, à partir de la face collante (18).

9. Appareil orthodontique selon la revendication 1, **caractérisé en ce qu'**un estampage (19') en U est formé dans la plaque de base (2), lequel définit une languette à ressort (19") qui est orientée vers l'enroulement (7) occlusal par son extrémité libre et vient se placer contre celui-ci.

10. Moyen pour placer un appareil orthodontique selon l'une des revendications 1 - 9, **caractérisé en ce que** le moyen est un applicateur/protecteur (20), avec une plaque de retenue (21) qui présente un tronçon plat qui peut être serré dans les enroulements (7, 8) côtés gingival et occlusal, dans lequel l'applicateur/protecteur (20) peut être inséré dans l'appareil orthodontique (1) par adhérence de forces et est doté d'un bourrelet (22) formé verticalement contre la plaque de retenue (21).

11. Moyen selon la revendication 10 destiné à l'emploi dans un appareil orthodontique selon l'une des revendications 2 - 4, **caractérisé en ce que** l'applicateur/protecteur (20) étanchéifie complètement au moins les ouvertures de passage de la lumière (15, 16) reposant dans la plaque de base (2).

12. Moyen selon la revendication 10 ou 11, **caractérisé en ce qu'**il est fabriqué en plastique transparent.
